# EUROPEAN PATENT APPLICATION

(11) **EP 4 617 829 A1**
(43) Date of publication of application: **17.09.2025**
(21) Application number: 23896644.4
(22) Date of filing: 23.11.2023
(51) Int. Cl.: G06F 3/01

(54) **HUMAN-MACHINE INTERACTION METHOD AND APPARATUS**

(30) Priority: 02.12.2022 CN 202211537174
(71) Applicant: Huawei Technologies Co., Ltd., Shenzhen, Guangdong 518129 (CN)
(72) Inventor: ZHANG, Jinting, Shenzhen, Guangdong 518129 (CN); ZHENG, Jiangzhen, Shenzhen, Guangdong 518129 (CN); WANG, Zongbo, Shenzhen, Guangdong 518129 (CN)
(74) Representative: Pfenning, Meinig & Partner mbB
(86) International application number: PCT/CN2023/133513
(87) International publication number: WO 2024/114493

(57) **Abstract**

This application provides a human-computer interaction method and apparatus. The method may be applied to an electronic device. The method includes: obtaining a first change, where the first change includes at least one of a body action change of a user, a location change of at least a part of a body of the user relative to the electronic device, a location change of the electronic device, and a location change of the electronic device relative to the user; and processing a target event, where the target event is viewing a real-time message on the electronic device. According to the method and the apparatus provided in embodiments of this application, the electronic device can infer an interaction intention of the user based on the first change, to process an event that the user expects to process. In this way, intelligent experience of using the electronic device by the user can be improved.

## Description

This application claims priority to Chinese Patent Application No. 202211537174.2, filed with the China National Intellectual Property Administration on December 2, 2022 and entitled "HUMAN-COMPUTER INTERACTION METHOD AND APPARATUS", which is incorporated herein by reference in its entirety.

### TECHNICAL FIELD

This application relates to the terminal field, and more specifically, to a human-computer interaction method and apparatus.

### BACKGROUND

With development of electronic technologies and the mobile internet, electronic devices such as mobile phones, tablet computers, and personal computers have become indispensable devices for people in daily lives, and people can process various events on the electronic devices. When wanting to process an event on the electronic device, a user usually needs to perform an interaction action such as tapping a screen of the electronic device to directly operate the electronic device, to view or process a message.

However, in some cases, it is inconvenient for the user to perform an interaction action such as tapping on the electronic device to directly operate the electronic device. For example, a hand of the user is currently busy with another transaction. In these cases, the user cannot view or process the event on the electronic device in time, affecting user experience of the electronic device.

### SUMMARY

This application provides a human-computer interaction method and apparatus. The method and the apparatus may be applied to an electronic device, to improve user experience of the electronic device.

According to a first aspect, this application provides a human-computer interaction method. The method includes: obtaining a first change, where the first change includes at least one of a body action change of a user, a location change of at least a part of a body of the user relative to an electronic device, a location change of the electronic device, and a location change of the electronic device relative to the user; and processing a target event, where the target event is viewing a real-time message on the electronic device.

In the foregoing technical solution, the electronic device can identify a pre-interaction action of the user based on the first change, to infer that the user wants to view the real-time message. In this way, the user does not need to perform an interaction action such as tapping on the electronic device to directly operate the electronic device. This improves intelligent experience of using the electronic device by the user. In addition, in this way, a body action performed before a direct operation on the electronic device is also included in a scope of interactive input, to shorten an interaction path of the user.

With reference to the first aspect, in some implementations of the first aspect, the body action change of the user includes: turning of a head of the user.

With reference to the first aspect, in some implementations of the first aspect, the turning of the head of the user is determined based on a change of a head reflective surface of the user from a head side to a head front.

With reference to the first aspect, in some implementations of the first aspect, the target event is one of a plurality of interactive events.

In the foregoing technical solution, compared with directly selecting, from all events of the electronic device, a target event that matches a body action of the user, in this technical solution, interactive events that the user can interact with or process are first selected, and then an event that matches the body action of the user is determined from these interactive events as the target event that the user wants to process. In this way, a range of target events selected by the electronic device is narrowed, to reduce time for determining the target event. Therefore, intelligent experience of using the electronic device by the user is further improved.

With reference to the first aspect, in some implementations of the first aspect, the method further includes: determining the plurality of interactive events based on a current process of the electronic device.

With reference to the first aspect, in some implementations of the first aspect, the method further includes: determining a priority ranking of the plurality of interactive events, where the plurality of interactive events include a real-time interactive event and a long-term interactive event, a priority of the real-time interactive event is higher than a priority of the long-term interactive event, the real-time interactive event is an event that needs to be processed by the user within a preset time period, and the long-term interactive event is an event that is available for the user to process at any time; and determining the target event from the plurality of interactive events based on the first change and the priority ranking.

In the foregoing technical solution, when one body action corresponds to both a long-term interactive event and a real-time interactive event, the real-time interactive event is preferentially selected as an event that needs to be processed currently, to better align with a current interaction intention of the user, and further improve intelligent experience of using the electronic device by the user.

With reference to the first aspect, in some implementations of the first aspect, processing the target event includes: entering, by the electronic device, a lock screen interface from an always-on display interface.

In the foregoing technical solution, when the electronic device receives the real-time message, the user does not need to perform an operation behavior such as tapping the message on the electronic device to directly operate the electronic device, and the electronic device identifies a user intention based only on a pre-interaction action indicating that the user wants to view a source of the real-time message, and enters the lock screen interface from the always-on display interface. This shortens an interaction path of the user, and further improves intelligent experience of using the electronic device by the user.

With reference to the first aspect, in some implementations of the first aspect, when a distance between the head of the user and the electronic device decreases, processing the target event further includes: displaying, by the electronic device, all content of the real-time message on the lock screen interface.

In the foregoing technical solution, when the electronic device receives the real-time message and the electronic device displays the lock screen interface, the user does not need to perform an operation behavior such as tapping the message on the electronic device to directly operate the electronic device, and can realize an intention to view complete content of the message only by performing a leaning body action that indicates that the user wants to view specific content of the real-time message. This shortens an interaction path of the user, and further improves intelligent experience of using the electronic device by the user.

With reference to the first aspect, in some implementations of the first aspect, the decrease in the distance between the head of the user and the electronic device is determined based on an increase in the head reflective surface of the user.

With reference to the first aspect, in some implementations of the first aspect, obtaining the first change includes: obtaining the first change when a to-be-processed event occurs in the electronic device.

In the foregoing technical solution, compared with continuously obtaining the first change of the user for a long period, obtaining the first change of data of a current behavior of the user only after the to-be-processed event occurs can prolong use time of the electronic device.

With reference to the first aspect, in some implementations of the first aspect, obtaining the first change includes: obtaining the first change by using at least one of a millimeter-wave radar sensor, a lidar sensor, and an ultrasonic radar sensor.

According to a second aspect, this application provides a human-computer interaction method. The method includes: obtaining a first change, where the first change includes at least one of a body action change of a user, a location change of at least a part of a body of the user relative to an electronic device, a location change of the electronic device, and a location change of the electronic device relative to the user; and processing a target event, where the target event is waking up a voice assistant.

In the foregoing technical solution, the electronic device can identify a pre-interaction action of the user based on the first change, to infer that the user wants to wake up the voice assistant. In this way, the user does not need to perform an interaction action such as tapping on the electronic device to directly operate the electronic device. This improves intelligent experience of using the electronic device by the user. In addition, in this way, a body action performed before a direct operation on the electronic device is also included in a scope of interactive input, to shorten an interaction path of the user.

With reference to the second aspect, in some implementations of the second aspect, the location change of at least the part of the body of the user relative to the electronic device includes: a distance between a head of the user and the electronic device decreases.

In the foregoing technical solution, when wanting to use the voice assistant, the user does not need to tap a screen to open the voice assistant, and can realize an intention to open the voice assistant only by performing a body action of picking up the electronic device and moving the electronic device close to the head of the user that indicates that the user wants to open the voice assistant. This shortens an interaction path of the user, and further improves intelligent experience of using the electronic device by the user.

With reference to the second aspect, in some implementations of the second aspect, the location change of the electronic device includes: moving the electronic device upward.

In the foregoing technical solution, it can be more accurately inferred, based on both the location change of moving the electronic device upward and the body action change of the user, that the user currently wants to wake up the voice assistant.

With reference to the second aspect, in some implementations of the second aspect, the waking up a voice assistant includes: waking up the voice assistant when a distance between the electronic device and the user is less than a preset value.

According to a third aspect, this application provides a human-computer interaction apparatus. The apparatus includes: an obtaining unit, configured to obtain a first change, where the first change includes at least one of a body action change of a user, a location change of at least a part of a body of the user relative to an electronic device, a location change of the electronic device, and a location change of the electronic device relative to the user; and a processing unit, configured to process a target event, where the target event is viewing a real-time message on the electronic device.

In the foregoing technical solution, the electronic device can identify a pre-interaction action of the user based on the first change through the human-computer interaction apparatus, to infer that the user wants to view the real-time message. In this way, the user does not need to perform an interaction action such as tapping on the electronic device to directly operate the electronic device. This improves intelligent experience of using the electronic device by the user. In addition, in this way, a body action performed before a direct operation on the electronic device is also included in a scope of interactive input, to shorten an interaction path of the user.

With reference to the third aspect, in some implementations of the third aspect, the body action change of the user includes turning of a head of the user.

With reference to the third aspect, in some implementations of the third aspect, the turning of the head of the user is determined based on a change of a head reflective surface of the user from a head side to a head front.

With reference to the third aspect, in some implementations of the third aspect, the target event is one of a plurality of interactive events.

In the foregoing technical solution, compared with directly selecting, from all events of the electronic device, a target event that matches a body action of the user, in this technical solution, the electronic device first selects, through the human-computer interaction apparatus, interactive events that the user can interact with or process, and then determines an event that matches the body action of the user from these interactive events as the target event that the user wants to process. In this way, a range of target events selected by the electronic device is narrowed, to reduce time for determining the target event. Therefore, intelligent experience of using the electronic device by the user is further improved.

With reference to the third aspect, in some implementations of the third aspect, the apparatus further includes: a determining unit, configured to determine the plurality of interactive events based on a current process of the electronic device.

With reference to the third aspect, in some implementations of the third aspect, the determining unit is further configured to: determine a priority ranking of the plurality of interactive events, where the plurality of interactive events include a real-time interactive event and a long-term interactive event, a priority of the real-time interactive event is higher than a priority of the long-term interactive event, the real-time interactive event is an event that needs to be processed by the user within a preset time period, and the long-term interactive event is an event that is available for the user to process at any time; and determine the target event from the plurality of interactive events based on the first change and the priority ranking.

In the foregoing technical solution, when one body action corresponds to both a long-term interactive event and a real-time interactive event, the electronic device preferentially select, through the apparatus, the real-time interactive event as an event that needs to be processed currently, to better align with a current interaction intention of the user, and further improve intelligent experience of using the electronic device by the user.

With reference to the third aspect, in some implementations of the third aspect, the processing unit is further configured to enable the electronic device to enter a lock screen interface from an always-on display interface.

In the foregoing technical solution, when the electronic device receives the real-time message, the user does not need to perform an operation behavior such as tapping the message on the electronic device to directly operate the electronic device, and the electronic device identifies a user intention through the human-computer interaction apparatus based only on a pre-interaction action indicating that the user wants to view a source of the real-time message, and enters the lock screen interface from the always-on display interface. This shortens an interaction path of the user, and further improves intelligent experience of using the electronic device by the user.

With reference to the third aspect, in some implementations of the third aspect, when a distance between the head of the user and the electronic device decreases, the processing unit is further configured to enable the electronic device to display all content of the real-time message on the lock screen interface.

In the foregoing technical solution, when the electronic device receives the real-time message and the electronic device displays the lock screen interface, the electronic device can analyze, through the human-computer interaction apparatus based only on the leaning body action of the user, an intention that the user wants to view specific content of the real-time message. This shortens an interaction path of the user, and further improves intelligent experience of using the electronic device by the user.

With reference to the third aspect, in some implementations of the third aspect, the decrease in the distance between the head of the user and the electronic device is determined based on an increase in the head reflective surface of the user.

With reference to the third aspect, in some implementations of the third aspect, the obtaining unit is further configured to obtain the first change when a to-be-processed event occurs in the electronic device.

In the foregoing technical solution, compared with continuously obtaining current behavior data of the user for a long period, the electronic device obtains the current behavior data of the user through the human-computer interaction apparatus only after the to-be-processed event occurs. In this way, use time of the electronic device can be prolonged.

With reference to the third aspect, in some implementations of the third aspect, the obtaining unit is further configured to obtain the first change through at least one of a millimeter-wave radar sensor, a lidar sensor, and an ultrasonic radar sensor.

According to a fourth aspect, this application provides a human-computer interaction apparatus. The apparatus includes: an obtaining unit, configured to obtain a first change, where the first change includes at least one of a body action change of a user, a location change of at least a part of a body of the user relative to an electronic device, a location change of the electronic device, and a location change of the electronic device relative to the user; and a processing unit, configured to process a target event, where the target event is waking up a voice assistant.

In the foregoing technical solution, the electronic device can identify a pre-interaction action of the user based on the first change through the human-computer interaction apparatus, to infer that the user wants to wake up the voice assistant. In this way, the user does not need to perform an interaction action such as tapping on the electronic device to directly operate the electronic device. This improves intelligent experience of using the electronic device by the user. In addition, in this way, a body action performed before a direct operation on the electronic device is also included in a scope of interactive input, to shorten an interaction path of the user.

With reference to the fourth aspect, in some implementations of the fourth aspect, the location change of at least the part of the body of the user relative to the electronic device includes: a distance between a head of the user and the electronic device decreases.

In the foregoing technical solution, when wanting to use the voice assistant, the user does not need to tap a screen to open the voice assistant, and can realize an intention to open the voice assistant only by performing a body action of picking up the electronic device and moving the electronic device close to the head of the user that indicates that the user wants to open the voice assistant. This shortens an interaction path of the user, and further improves intelligent experience of using the electronic device by the user.

With reference to the fourth aspect, in some implementations of the fourth aspect, the location change of the electronic device includes: moving the electronic device upward.

In the foregoing technical solution, it can be more accurately inferred, based on both the location change of moving the electronic device upward and the body action change of the user, that the user currently wants to wake up the voice assistant.

With reference to the fourth aspect, in some implementations of the fourth aspect, the processing unit is further configured to wake up the voice assistant when a distance between the electronic device and the user is less than a preset value.

According to a fifth aspect, this application provides an electronic device. The electronic device includes: a memory, configured to store a computer program; and a processor, configured to execute the computer program stored in the memory, so that the electronic device performs the method according to any one of the first aspect, the implementations of the first aspect, the second aspect, or the implementations of the second aspect.

According to a sixth aspect, this application provides a computer-readable storage medium. The computer-readable storage medium stores a computer program, and when the computer program is executed by a computer, the computer is enabled to perform the method according to any one of the first aspect, the implementations of the first aspect, the second aspect, or the implementations of the second aspect.

According to a seventh aspect, this application provides a computer program product. The computer program product includes a computer program, and when the computer program is executed by a computer, the computer is enabled to perform the method in any one of the first aspect, the implementations of the first aspect, the second aspect, or the implementations of the second aspect.

### BRIEF DESCRIPTION OF DRAWINGS

FIG. 1 is a diagram of a hardware structure of an electronic device according to an embodiment of this application;
FIG. 2 is a block diagram of a software structure of an electronic device according to an embodiment of this application;
FIG. 3 is a set of graphical user interfaces according to an embodiment of this application;
FIG. 4 is another set of graphical user interfaces according to an embodiment of this application;
FIG. 5 is another set of graphical user interfaces according to an embodiment of this application;
FIG. 6 is another set of graphical user interfaces according to an embodiment of this application;
FIG. 7 is another set of graphical user interfaces according to an embodiment of this application;
FIG. 8 is another set of graphical user interfaces according to an embodiment of this application;
FIG. 9 is another set of graphical user interfaces according to an embodiment of this application;
FIG. 10 is another set of graphical user interfaces according to an embodiment of this application;
FIG. 11 is another set of graphical user interfaces according to an embodiment of this application;
FIG. 12 is a flowchart of a human-computer interaction method according to an embodiment of this application;
FIG. 13 is a flowchart of another human-computer interaction method according to an embodiment of this application;
FIG. 14 is a diagram of a structure of a human-computer interaction apparatus according to an embodiment of this application;
FIG. 15 is a diagram of a structure of another human-computer interaction apparatus according to an embodiment of this application; and
FIG. 16 is a diagram of a structure of an electronic device according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the description of embodiments, unless otherwise specified, "a plurality of" means two or more.

A method provided in embodiments of this application may be applied to an electronic device such as a mobile phone, a tablet computer, a wearable device, an in-vehicle device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

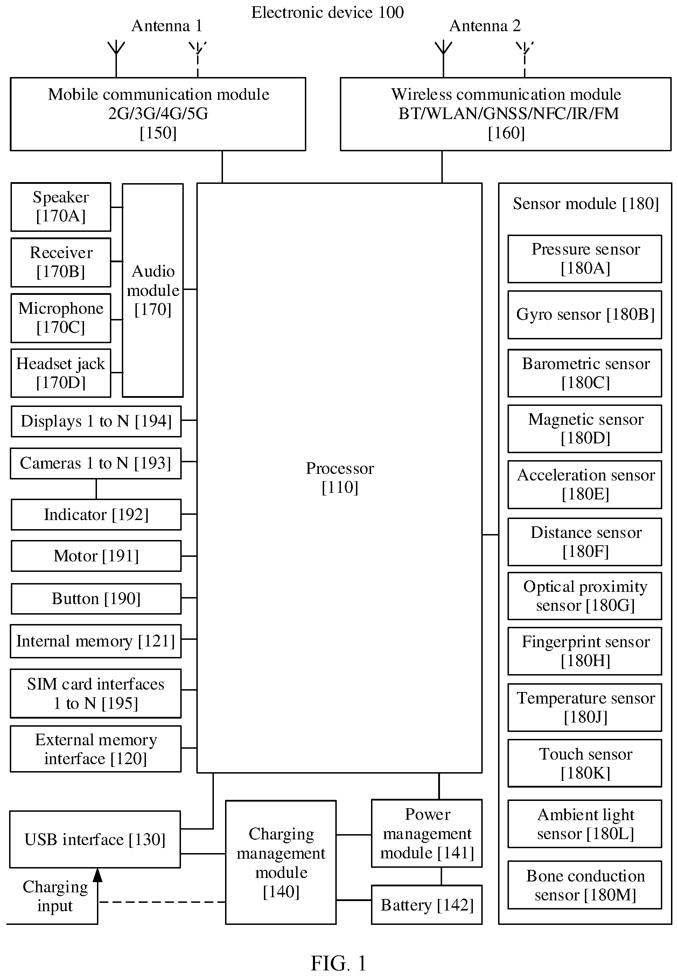

For example, FIG. 1 is a diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call by using a Bluetooth headset.

The PCM interface may also be configured to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call by using a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music by using a Bluetooth headset.

The MIPI interface may be configured to connect the processor 110 to a peripheral device such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio by using the headset. The interface may be further configured to connect to another electronic device such as an AR device.

It may be understood that an interface connection relationship between the modules illustrated in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite based augmentation systems (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the camera 193, the ISP, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP, to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transfer between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode by using the speaker 170A.

The receiver 170B, also referred to as an "earpiece", is configured to convert an audio electrical signal into a sound signal. When a call is answered or audio information is received by using the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on a Messages application icon, an instruction for viewing an SMS message is performed. When a touch operation whose touch operation intensity is greater than or equal to the first pressure threshold is performed on the Messages application icon, an instruction to create a new SMS message is performed.

The gyro sensor 180B may be configured to determine a moving posture of the electronic device 100. In some embodiments, an angular velocity of the electronic device 100 around three axes (namely, axes x, y, and z) may be determined through the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may also be used in a navigation scenario and a somatic game scenario.

The barometric sensor 180C is configured to measure barometric pressure. In some embodiments, the electronic device 100 calculates an altitude through the barometric pressure measured by the barometric sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a flip phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light emitting diode (LED) and an optical detector, for example, a photodiode. The light emitting diode may be an infrared light emitting diode. The electronic device 100 emits infrared light by using the light-emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided by using the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may also be compatible with different types of SIM cards. The SIM card interface 195 may be further compatible with an external memory card. The electronic device 100 interacts with a network through the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In this embodiment of this application, an Android system with a layered architecture is used as an example to describe a software structure of the electronic device 100.

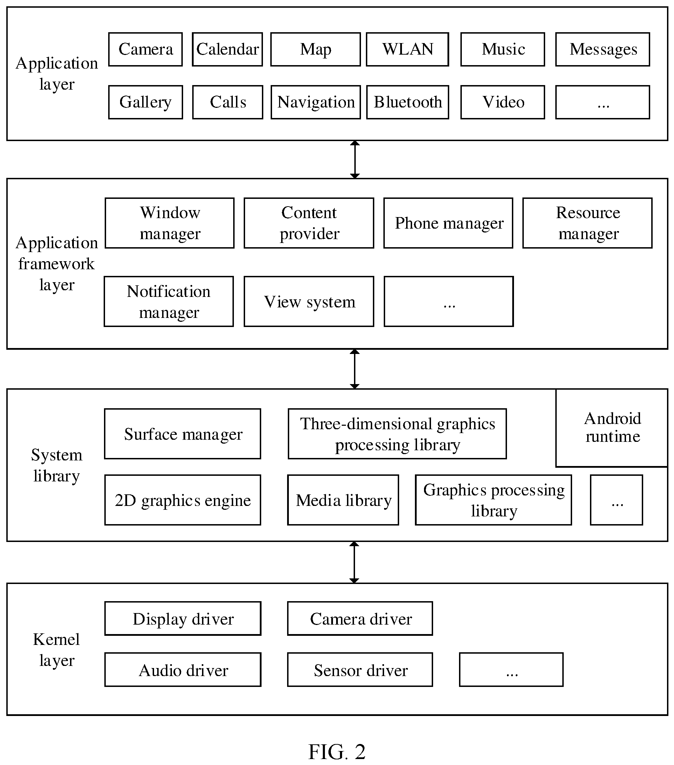

FIG. 2 is a block diagram of the software structure of the electronic device 100 in this embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2, an application package may include applications such as Camera, Gallery, Calendar, Calls, Map, Navigation, WLAN, Bluetooth, Music, Video, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, audio, calls that are made and received, a browsing history, a bookmark, a phone book, and the like.

The view system includes visual controls such as a control for displaying a text and a control for displaying an image. The view system may be configured to construct an application. A display interface may include one or more views. For example, a display interface including an

SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an alert tone is made, the electronic device vibrates, or an indicator blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The hardware layer may include various types of sensors, for example, various types of sensors described in FIG. 1. The sensors in embodiments of this application include a proximity sensor, an image sensor, a millimeter-wave radar sensor, a lidar sensor, an ultrasonic radar sensor, a gravity sensor, a gyro sensor, and the like.

It should be understood that embodiments of this application may be applied to a system such as Android, iOS, or HarmonyOS.

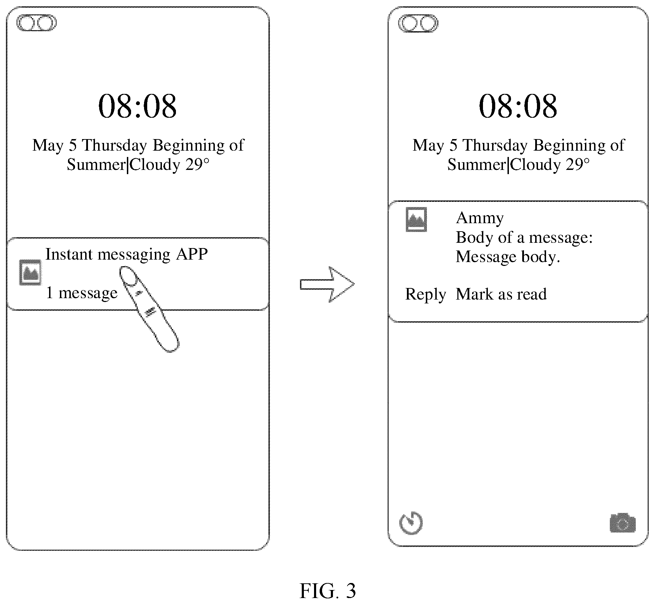

In daily life, people receive various messages, for example, an SMS message reminder or an incoming call reminder, on an electronic device such as a mobile phone. When the user wants to further view or process the received message, the user needs to perform an interaction action such as manually tapping a screen. For example, as shown in FIG. 3, the user receives a message. In this case, the mobile phone displays a lock screen interface, and the lock screen interface includes a message bubble. The message bubble displays a source of the message, that is, an instant messaging application (Application, APP), but does not display all content of the message. If the user wants to further view the message, in the current technology, the user needs to manually tap the message bubble, so that the message bubble is further expanded into a message card, to present all the content of the message. However, in some actual scenarios, it is inconvenient for the user to perform an interaction action such as tapping the screen of the mobile phone. As a result, the user cannot learn all the content of the message in real time. For example, the user receives a message when cooking. Because the user may be cutting vegetables at this time, and is inconvenient to tap the screen of the mobile phone, the user cannot view specific content of the message.

A body action of the user before interaction with the electronic device such as the mobile phone may express an interaction intention of the user. For example, when a message of an SMS message notification is received, when a person turns a head to look at the mobile phone, it indicates that the person has known that the mobile phone receives the SMS message notification and wants to view an information source; when the person leans toward the mobile phone, it indicates that the user wants to view specific content of the SMS message; and when the user stretches out a hand to the mobile phone, it indicates that the user wants to process the received SMS message. There are many more examples like these, in which the user does not need to perform an interaction action such as tapping the screen of the electronic device such as the mobile phone, but may express a user intention by using a body action performed by the user before the user interacts with the electronic device such as the mobile phone.

In view of this, embodiments of this application provide a human-computer interaction method and apparatus. According to the method, an intention of the user to process an event of an electronic device such as a mobile phone can be determined based on a body action performed by the user before the user interacts with the mobile phone, to improve intelligent experience of using the electronic device by the user.

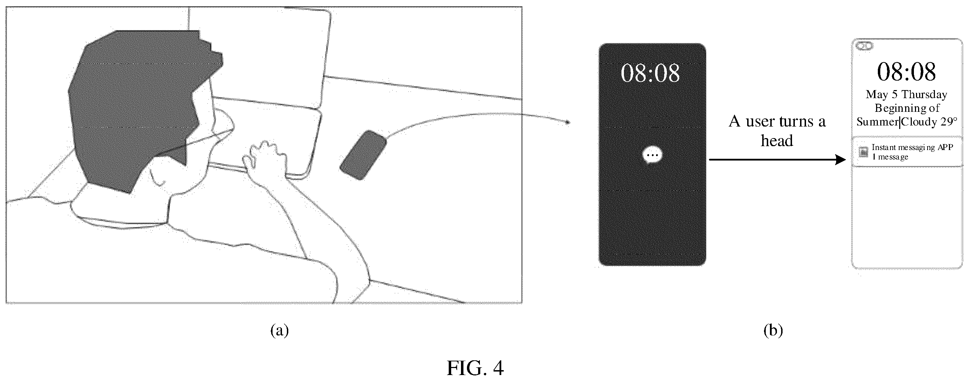

FIG. 4 is a diagram of a set of graphical user interfaces (graphical user interfaces, GUIs) according to an embodiment of this application.

A user is working on a computer, a mobile phone is placed next to the computer, and the mobile phone is in a screen-off state.

The mobile phone receives a real-time message at a moment, the mobile phone switches from a screen-off interface (that is, a black screen state) to an always-on display interface, and the always-on display interface displays an icon of a source APP of the real-time message. The icon shows that the message is from an instant messaging APP. In this case, the user notes a change on a screen of the mobile phone with peripheral vision, and wants to view an event that causes the interface change of the mobile phone. However, the user temporarily does not intend to immediately switch from a current working state to a state of processing the message on the mobile phone, but wants to make a decision based on importance of the message. Therefore, the user turns a head to look at the mobile phone, to preview the interface change of the mobile phone.

Refer to (a) in FIG. 4. After the user performs a head turning action, the mobile phone may obtain, through a data collection apparatus such as a millimeter-wave radar sensor, data that represents head turning of the user. When the user turns the head to face the mobile phone, the mobile phone may determine that the user performs the head turning action. After determining that the user turns the head, the mobile phone may find, from a current process, an event that matches the head turning action of the user-viewing the real-time message, that is, determine that the user's intention to turn the head is largely to process the event "viewing the real-time message".

After the mobile phone finds the event that matches the head turning action of the user-viewing the real-time message, a screen of the mobile phone switches from the always-on display interface to a lock screen interface. Refer to the GUIs shown in (b) in FIG. 4. The unlock interface displays a message bubble, and the unlock interface further displays more information such as weather of a day. The message bubble includes a source APP icon of the message and a quantity of messages. Apparently, the unlock interface includes more information than that on the always-on display interface.

In an embodiment, before searching for the event that matches the head turning action of the user, the mobile phone first selects events that can be processed by the user, and then searches the events that can be processed by the user for the event that matches the head turning action of the user.

In this embodiment of this application, the mobile phone first selects the events that can be processed by the user, and then searches these events for an event that matches a user action. In this way, a selecting step is added, and searching time can be reduced, to improve running efficiency of the mobile phone.

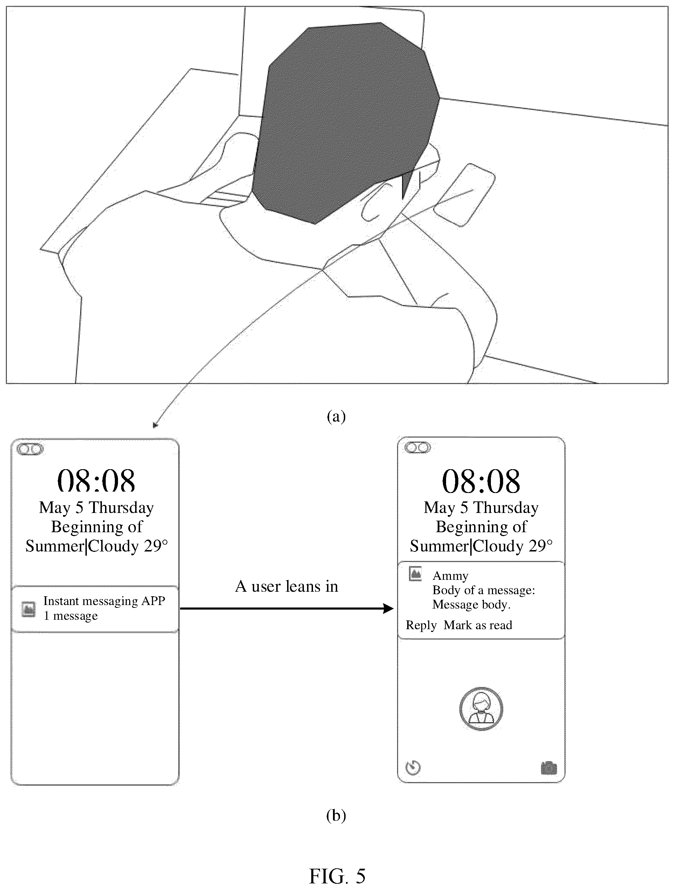

In an embodiment, when the user turns the head and sees that the message source APP displayed on the unlock page is a source APP of a message that the user needs to immediately process, a further action is performed. Refer to FIG. 5.

FIG. 5 is a diagram of a set of GUIs according to an embodiment of this application.

In the GUIs shown in FIG. 5, when the user turns the head and views the message on the lock screen interface that the user may need to immediately process, the user expects to learn specific content of the message. Therefore, in a time period in which the unlock interface remains on, the user leans in and looks at the screen of the mobile phone, to determine whether the message needs to be processed on the mobile phone subsequently.

Refer to the GUI shown in (a) in FIG. 5. After the user performs a leaning-in action, the mobile phone may obtain, through a device such as a sensor, data about leaning in by the user. When the user leans in until a distance to the screen of the mobile phone reaches a preset value, the mobile phone determines that the user performs the leaning-in action. After determining that the user performs the leaning-in action, the mobile phone may find, from a current process, an event that matches the leaning-in action of the user-viewing the real-time message. That is, the mobile phone determines that the user leans in to largely process the event "the mobile phone receives the real-time message".

After the mobile phone finds the event that matches the leaning-in action of the user-viewing the real-time message, the message bubble on the unlock interface of the mobile phone is expanded into a message card. Refer to the GUIs shown in FIG. 5. The message card displays all content of the message, so that the user views the specific content of the message.

In an embodiment, when a message bubble is expanded into a message card, a user verification function such as facial recognition of the mobile phone may be automatically activated. When it indicates, through user verification, that a currently identified user is an owner of the mobile phone, the message bubble is further expanded into the message card. When it indicates, through user verification, that the currently identified user is not the owner of the mobile phone, the unlock interface maintains the original display interface of the message bubble.

In an embodiment, the mobile phone obtains, through a device such as the millimeter-wave radar sensor, data about leaning in by the user, and may further obtain a motion status of the mobile phone through a device such as a gyro sensor. The motion status may include a static state and a moving state. The millimeter-wave radar obtains the data about leaning in by the user. The motion status of the mobile phone obtained by the gyro indicates that the mobile phone is in the static state. The mobile phone may comprehensively determine, based on the two, that the user performs an action of actively approaching the mobile phone and leaning in.

In this embodiment of this application, the mobile phone uses data that is about the motion status of the mobile phone and that is collected by the gyro to assist in determining a current body action of the user based on data that is about the body action of the user and that is collected by the millimeter-wave radar sensor, so that accuracy of identifying the body action by the mobile phone can be improved.

In this embodiment of this application, when the user wants to view the specific content of the real-time message, the user does not need to tap the screen by using a finger. The mobile phone may sense, by using the user's body action "leaning in to look at the mobile phone", that the user wants to view the complete content of the message, and therefore expand the message bubble into the message card for viewing by the user. In this way, the user's action of tapping the mobile phone can be omitted, and operation steps are reduced, thereby improving user experience.

In this embodiment of this application, the user first turns the head, and the screen of the mobile phone switches from the always-on display interface to the unlock interface. Then, the user leans in, and the screen of the mobile phone displays the complete content of the message. After the subsequent leaning-in action is added, the user can view the complete information only after continuous actions "first turning the head and then leaning in". Therefore, a possibility of false positive is reduced. For example, the user turns the head not to view the interface of the mobile phone, but moves the neck to relax.

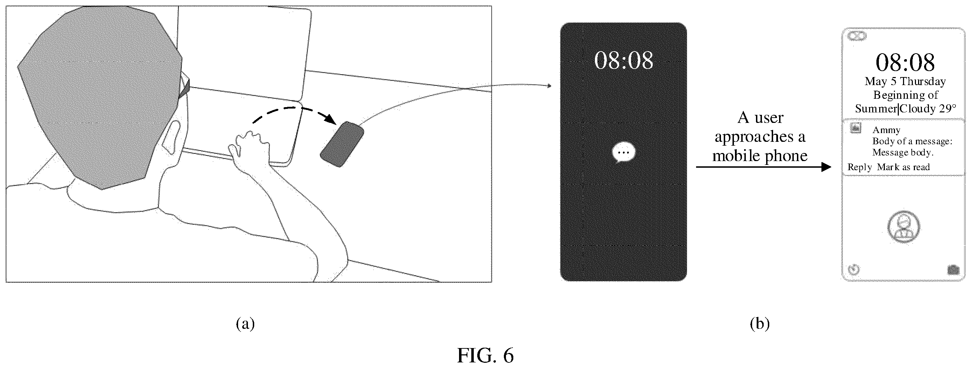

FIG. 6 is a diagram of a set of GUIs according to an embodiment of this application.

A user is watching a video in front of a computer, a mobile phone is placed next to the computer, and the mobile phone is currently in a screen-off state.

In this case, the mobile phone receives a message, the mobile phone switches from a screen-off interface to an always-on display interface, and a source of the message is displayed on the always-on display interface. In this case, the user wants to directly view the information. Therefore, the user stretches a hand toward the mobile phone.

Refer to the GUI shown in (a) in FIG. 6. After the user performs the hand stretching action, the mobile phone obtains data about a distance between the hand of the user and the mobile phone through a device such as a sensor. When the distance between the hand of the user and the mobile phone is less than a preset value, the mobile phone determines that the user performs the action of stretching the hand toward the mobile phone.

After determining that the user performs the action of stretching the hand toward the mobile phone, the mobile phone may find, from a current process, an event that matches the user's action of stretching the hand toward the mobile phone-viewing the real-time message. After the mobile phone finds the event that matches the user's action of stretching the hand toward the mobile phone-viewing the real-time message, as shown in the GUI in (b) in FIG. 6, a screen of the mobile phone switches from the always-on display interface to an unlock interface. The unlock interface displays a message card, and the message card displays complete content of the message for viewing by the user.

In an embodiment, when the screen of the mobile phone switches from the always-on display interface to the unlock interface, a user verification function such as facial recognition of the mobile phone may be automatically activated. When it indicates, through user verification, that the currently identified user is an owner of the mobile phone, the always-on display interface is switched to the unlock interface. When it indicates, through user verification, that the currently identified user is not the owner of the mobile phone, the mobile phone continues to maintain the always-on display interface.

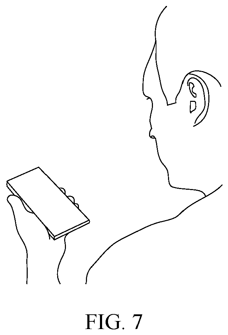

Refer to FIG. 7. In the same scenario as FIG. 6, after the mobile phone receives a message, the user wants to view the message immediately, and therefore, stretches a hand to pick up the mobile phone and moves the mobile phone in front of the face. The mobile phone may learn, through a proximity sensor, that the hand of the user is in contact with the mobile phone; learn, through a millimeter-wave radar sensor, that the face of the user faces the screen of the mobile phone; and learn, through a gyro, that the mobile phone is in a moving state. Based on information obtained through the proximity sensor, the millimeter-wave radar sensor, and the gyro, the mobile phone may determine that the user performs an action of picking up the mobile phone and moving the mobile phone in front of the face.

In this embodiment of this application, the mobile phone determines the user action based on both data that is about holding the mobile phone by the hand and that is obtained by the proximity sensor and data that is about a distance between the face and the mobile phone and that is obtained by the millimeter-wave radar sensor, to improve accuracy of identifying the body action of the user by the mobile phone.

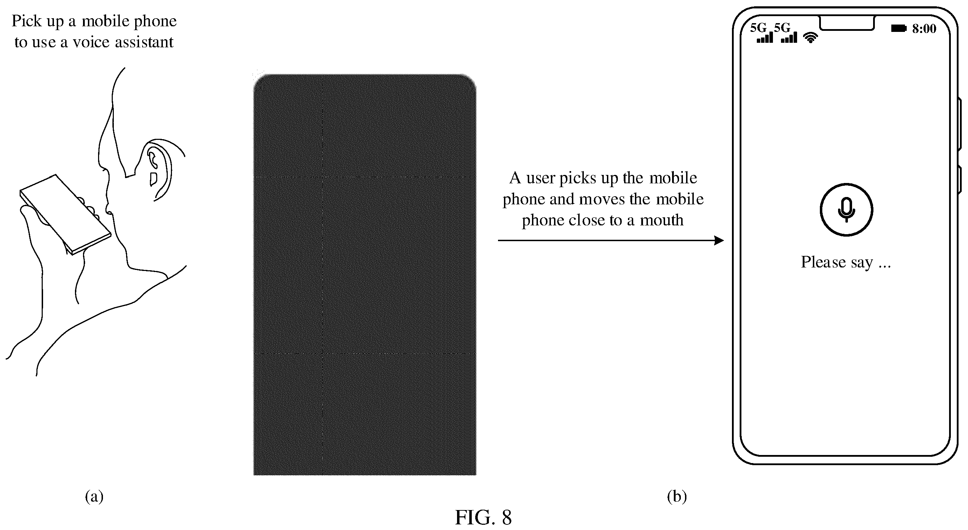

FIG. 8 is a diagram of GUIs according to an embodiment of this application.

A user is watching TV in a living room, and a mobile phone is placed on a TV cabinet. In this case, the mobile phone is in a screen-off state. The user suddenly remembers that the user is to go to the hospital for a medical examination at 10:00 tomorrow morning, and therefore, stretches a hand to pick up the mobile phone to wake up a voice assistant, so as to establish a reminder event "go to the hospital for a medical examination at 10:00 tomorrow morning".

Refer to (a) in FIG. 8. In a process in which the user stretches the hand to pick up the mobile phone and moves the mobile phone close to a mouth, the mobile phone may obtain, through a device such as a millimeter-wave radar sensor, data that indicates that a distance between the mouth of the user and the mobile phone gradually decreases, and may further obtain, through a device such as a gyro, data that indicates that the mobile phone is moving upward in this case. When the distance between the mobile phone and the mouth of the user is less than or equal to a preset value, the mobile phone may determine that the user performs an action of picking up the mobile phone and moving the mobile phone close to the mouth. After determining the action of the user, the mobile phone may find, from a current process, an event that matches the user's action of moving the mobile phone close to the mouth-waking up the voice assistant, that is, determine that the user performs the action of picking up the mobile phone and moving the mobile phone close to the mouth is to process the event "waking up the voice assistant".

Refer to (b) in FIG. 8. After the mobile phone finds the event that matches the user's action of picking up the mobile phone and moving the mobile phone close to the mouth-waking up the voice assistant, the screen of the mobile phone switches from the screen-off interface to a voice assistant working interface. The voice assistant working interface displays a reminder text "Please say..." and a touchscreen control. After pressing the touchscreen control, the user says "Go to the hospital for a medical examination at 10:00 tomorrow morning" to establish a reminder event on the mobile phone.

In this embodiment of this application, the mobile phone can know an intention of the user by using a pre-interaction action of picking up the mobile phone and moving the mobile phone close to the mouth, so that the user can wake up the voice assistant without tapping the screen. This improves intelligent experience of the user, reduces steps of waking up the voice assistant by the user, and reduces time for waking up the voice assistant.

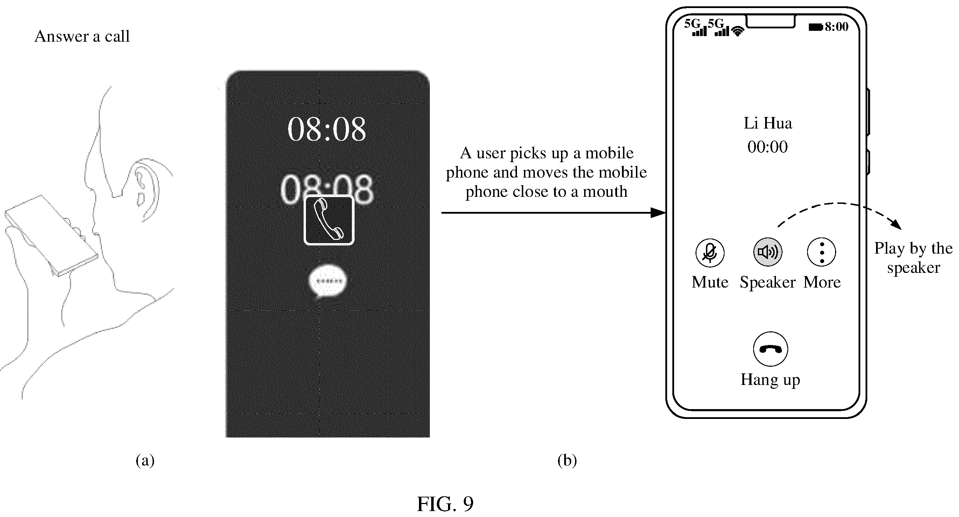

FIG. 9 is a diagram of a set of GUIs according to an embodiment of this application.

A user is watching a movie in front of a computer, a mobile phone is placed next to the computer, and the mobile phone is currently in a screen-off state.

When the mobile phone receives an incoming call, the mobile phone switches from a screen-off interface to an always-on display interface, and the always-on display interface displays an icon of a source APP of the message. The icon indicates that the message is from a Phone APP. In this case, the user stretches a hand to pick up the mobile phone and moves the mobile phone close to a mouth, to immediately answer the call via a speaker.

Refer to the GUI shown in (a) in FIG. 9. In a process in which the user picks up the mobile phone and moves the mobile phone close to the mouth, the mobile phone may obtain, through a proximity sensor, data about contact between the user and the mobile phone, may obtain, through a millimeter-wave radar sensor, data indicating that a distance between the mouth of the user and the mobile phone gradually decreases, and may obtain, through a gyro, data indicating that the mobile phone is in a moving state. When the distance between the mobile phone and the mouth of the user is less than or equal to a preset value, the mobile phone may determine that the user performs an action of picking up the mobile phone and moving the mobile phone close to the mouth. After determining the foregoing action of the user, the mobile phone may find, from a current process, an event that matches the user's action of picking up the mobile phone and moving the mobile phone close to the mouth-"the mobile phone receives an incoming call", that is, determine that an intention of the user to pick up the mobile phone and move the mobile phone close to the mouth is largely to process the event "the mobile phone receives an incoming call".

Refer to the GUIs shown in (b) in FIG. 9. After the mobile phone finds the event "the mobile phone receives an incoming call" that matches the foregoing action, the screen of the mobile phone switches from the always-on display interface to a call interface. That is, the mobile phone automatically answers the incoming call in a speaker mode.

In an embodiment, when the mobile phone searches for an event that matches an action, with reference to FIG. 8 and FIG. 9, it may be learned that the user's action of picking up the mobile phone and moving the mobile phone close to the mouth may match the event "the mobile phone receives an incoming call", or may match the event "waking up the voice assistant". However, the user's action of picking up the mobile phone and moving the mobile phone close to the mouth occurs within a time period after "the mobile phone receives an incoming call". In this case, apparently, the event "the mobile phone receives an incoming call" best matches the intention of the current action of the user. Therefore, the mobile phone determines that an event that matches the user's action of picking up the mobile phone and moving the mobile phone close to the mouth is the event "the mobile phone receives an incoming call", and determines that the intention of the user to pick up the mobile phone and move the mobile phone close to the mouth is largely to process the event "the mobile phone receives an incoming call", that is, answers the call in the speaker mode.

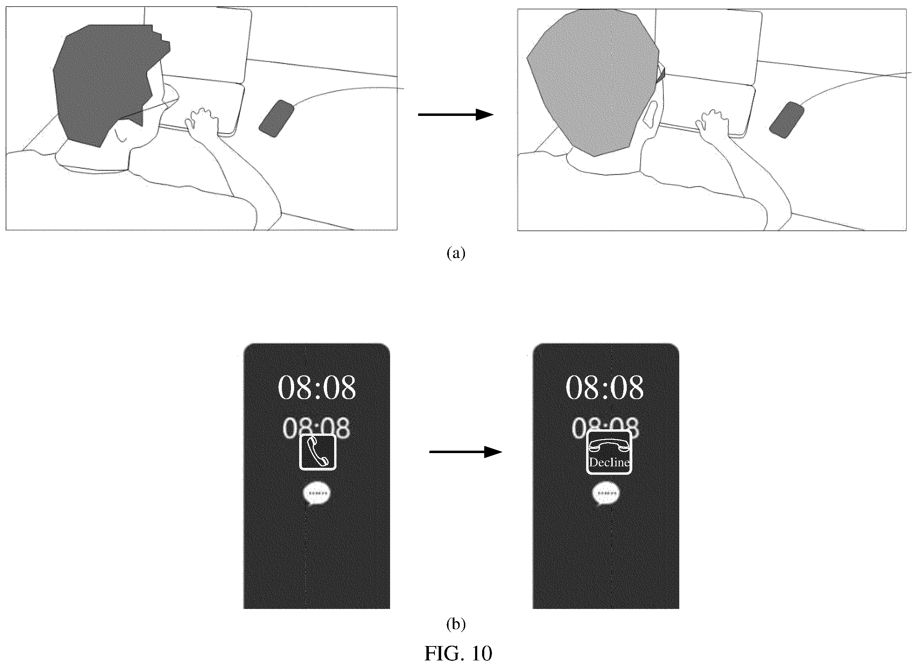

FIG. 10 is a diagram of another set of GUIs according to an embodiment of this application.

An application scenario of this embodiment is the same as that in FIG. 9, and is a scenario in which the user is watching a movie in front of the computer, the mobile phone receives an incoming call, and the mobile phone switches from a screen-off interface to an always-on display interface. In this case, the user wants to view an event that causes an interface change of the mobile phone, but temporarily does not intend to immediately switch from a current entertainment state to a state of processing the event on the mobile phone, and wants to make a decision based on importance of the event. Therefore, the user turns a head to look at the mobile phone, to preview an APP icon on the interface of the mobile phone.

Refer to the GUI shown in (a) in FIG. 10. The user turns the head to see that a reason for the interface change of the mobile phone is an incoming call. In this case, the user does not want to answer the call. Therefore, the user turns the head back to the computer and continues to watch the movie. The mobile phone may obtain turning data of the head of the user through a device such as a sensor. When the user turns the head to face the mobile phone, the mobile phone may determine that the user performs an action of turning the head of the user to look at the mobile phone. When the user sees an incoming call on the mobile phone and turns the head back to continue to look at the mobile phone, the mobile phone further determines that the user performs an action of turning the head to look at the mobile phone and then moving away. After determining the foregoing action of the user, the mobile phone may find, from a current process, an event that matches the user's action of turning the head to look at the mobile phone and then moving away-"the mobile phone receives an incoming call", that is, determine that an intention of the user to turn the head is largely to process the event "the mobile phone receives an incoming call".

After the mobile phone finds the event that matches the user action-"the mobile phone receives an incoming call", the mobile phone automatically hangs up the call, as shown in (b) in FIG. 10.

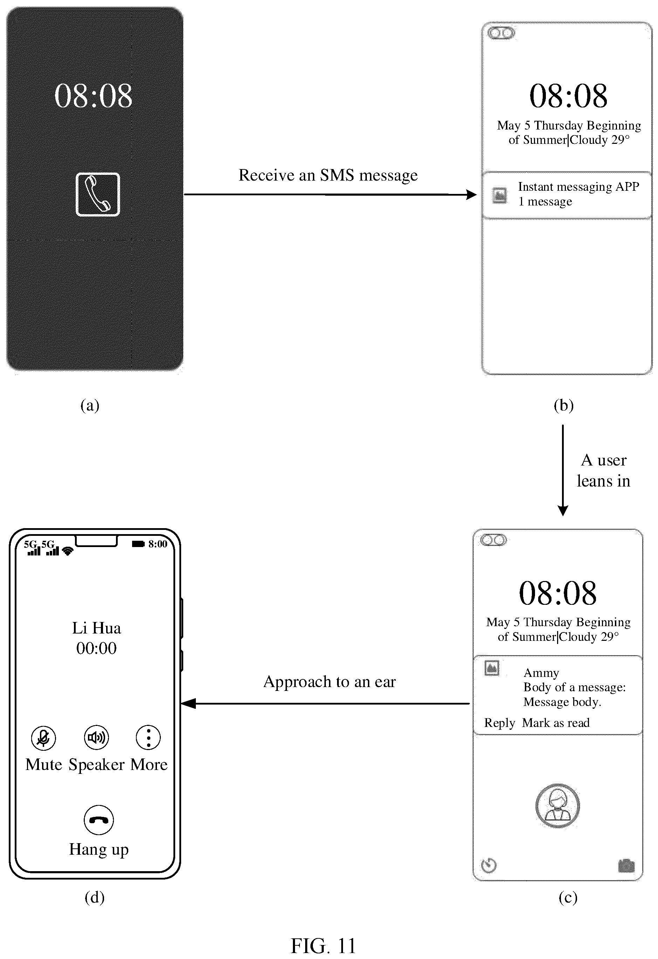

In an embodiment, the user turns the head to see that there is an incoming call to the mobile phone currently. Refer to (a) in FIG. 11. The user picks up the mobile phone and moves the mobile phone close to the head. In this process, the user always looks at the screen of the mobile phone. In a process of picking up the mobile phone and moving, the user receives an SMS message, and the SMS message floats in a bubble on a current incoming call interface of the mobile phone. Refer to (b) in FIG. 11. Because an action of the user in this case meets two actions: leaning in to look at the mobile phone, and picking up the mobile phone moving the mobile phone to an ear, the mobile phone may first determine that an event "the mobile phone receives a real-time message" is an event that is to be preferentially processed currently. In the process in which the user picks up the mobile phone and moves the mobile phone to the ear, the message bubble on the unlock interface is expanded into a message card, as shown in (c) in FIG. 11, so that the user can view the real-time message. After the user moves the mobile phone close to the ear, the mobile phone determines "the mobile phone receives an incoming call" as an event that needs to be processed currently. When a distance between the mobile phone and the ear of the user is equal to or less than a preset value, the mobile phone automatically answers the incoming call, as shown in (d) in FIG. 11.

In this embodiment of this application, the mobile phone determines, based on time of appearance, the event that needs to be preferentially processed. This manner better matches a current intention of the user to process an event on the mobile phone, and improves intelligent experience of using the mobile phone by the user.

For ease of understanding, in the following embodiments of this application, the electronic device having the structures shown in FIG. 1 and FIG. 2 is used as an example to describe in detail the human-computer interaction method provided in embodiments of this application with reference to the accompanying drawings and application scenarios.

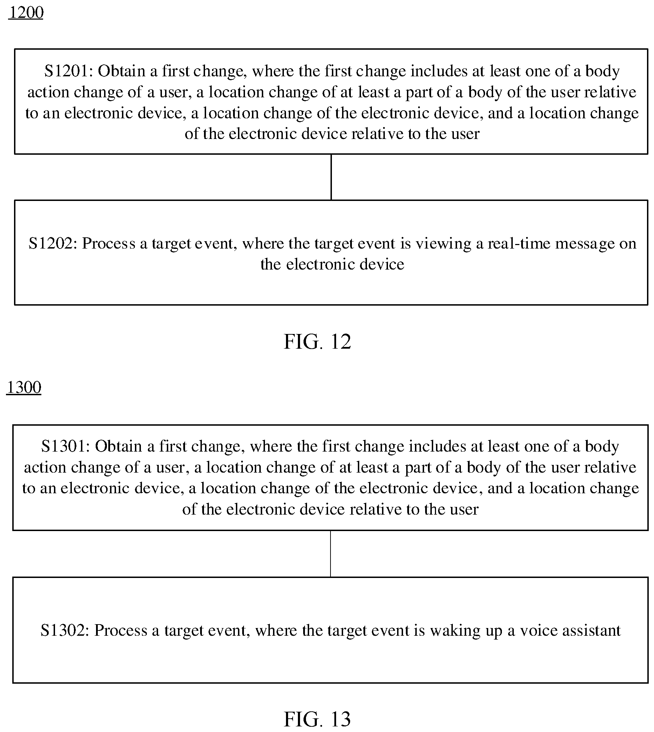

FIG. 12 is a flowchart of a human-computer interaction method 1200 according to an embodiment of this application. The method 1200 includes the following steps.

S1201: Obtain a first change, where the first change includes at least one of a body action change of a user, a location change of at least a part of a body of the user relative to an electronic device, a location change of the electronic device, and a location change of the electronic device relative to the user.

Optionally, before the first change is obtained, current behavior data of the user needs to be obtained first.

The electronic device obtains the current behavior data of the user in many manners. For example, various data collection devices are configured in the electronic device, and the electronic device may obtain, through these data collection devices, data that can represent a current behavior of the user. This is not limited in this application. All methods for obtaining the current behavior data of the user should fall within the protection scope of this application. For ease of understanding, the following describes a method for obtaining the current behavior data of the user through a data collection device.

It should be understood that the data collection device may be a sensor in the electronic device. This is not limited in this application. For ease of understanding, the sensor is used as the data collection device in the following descriptions.

It should be understood that the electronic device may include various devices such as a mobile phone, a personal computer, and a tablet computer. This is not limited in this application. The mobile phone is used as an example for description in the following embodiment.

Sensors currently configured in the mobile phone may include a gyro sensor, a gravity sensor, an infrared sensor, a millimeter-wave radar sensor, a lidar sensor, an ultrasonic radar sensor, and the like. Different types of sensors may collect different types of data. For example, the proximity sensor may be configured to measure a distance between the mobile phone and an object. The gyro sensor is also referred to as an angular velocity sensor, and may be configured to measure whether the mobile phone undergoes actions such as turning, tilting, or shaking, to assist in determining a current actual action of the user. The millimeter-wave radar sensor emits electromagnetic waves around the mobile phone, and an object (for example, a hand of a person) touched in a beam range scatters the energy waves. Some energy is reflected back to the radar sensor. The radar captures the reflected energy, and can sense features such as a size and a shape of the object and information such as a direction, a speed, and a moving distance of a dynamic behavior through arrival time and a change of a reflected wave band of a signal.

Optionally, the current behavior data of the user may be obtained through any one or more of the millimeter-wave radar sensor, the lidar sensor, or the ultrasonic radar sensor. This is not limited in this application.

Optionally, the current behavior data of the user in this embodiment of this application may include data that represents the body action change of the user and/or data that represents the location change of at least the part of the body relative to the electronic device. This is not limited in this application.

It should be understood that the body action change may include a change such as turning of at least a part of the body. For example, as shown in FIG. 4, after the user turns a head, the mobile phone may obtain data of head turning of the user through the data collection apparatus such as the millimeter-wave radar sensor. When the user turns the head to face the mobile phone, the mobile phone may determine that the user performs a head turning action.

Optionally, the body action change may include a head action change, a hand action change, an eye action change, and the like. Any body action change that can indicate an intention of the user to operate the mobile phone should fall within the protection scope of this application. This is not limited in this application. For example, as shown in (a) in FIG. 4, after the mobile phone receives a message, the user turns the head, indicating that the user already knows that the mobile phone receives the message.

Optionally, the location change of at least the part of the body of the user relative to the electronic device may include a change of a distance between at least the part of the body of the user and the electronic device. For example, as shown in (a) in FIG. 6, the proximity sensor may obtain data about a gradual decrease in a distance between a hand of the user and the mobile phone. The location change may also include a change of a relative orientation of the body of the user relative to the terminal. This is not limited in this application.

Optionally, the location change of at least the part of the body of the user relative to the electronic device may be a location change of one body part of the user relative to the terminal, or may be a location change of each of two or more body parts of the user relative to the terminal. This is not limited in this application.

It should be further understood that various types of sensors may have different working modes. Some sensors may work in real time, that is, obtain behavior data of the user at a current moment in real time. For example, the proximity sensor may determine in real time whether the user approaches the mobile phone. Some other sensors may start to work when the mobile phone meets a specific condition, that is, obtain behavior data of the user under a condition. For example, after the mobile phone receives an SMS message, a front-facing image sensor may start to collect image data in response to the event, to collect an image for an action of the user in a next time period.

It should be further understood that various sensors on the electronic device may collect data in a screen-off state. For example, the proximity sensor may detect in real time whether the user approaches the mobile phone in the screen-off state. For another example, after the mobile phone receives a real-time message, a front-facing camera may collect an image of the user at a preset frequency in the screen-off state.

Optionally, before the current behavior data of the user is obtained, a specific condition needs to be met. This is not limited in this application. For example, the current behavior data of the user is obtained only when a to-be-processed event occurs in the electronic device.

Optionally, after the current behavior data of the user is obtained, the body action change of the user and/or the location change of at least the part of the body of the user relative to the electronic device are/is determined based on the current behavior data. The electronic device may analyze the two changes, to determine a body action of the user generated in a current time period. A body action that meets the foregoing condition may alternatively be referred to as a pre-interaction action.

Optionally, the pre-interaction action may include at least one of turning the head, leaning in, and picking up the electronic device and moving the electronic device close to the head.

By way of example, but not limitation, as shown in (a) in FIG. 6, the mobile phone senses, based on data collected by the proximity sensor, that the hand of the user is approaching the mobile phone, and the pre-interaction action of the user is that the hand of the user approaches the mobile phone. As shown in FIG. 7, the mobile phone senses, based on the data collected by the proximity sensor, that the user holds the mobile phone in the hand, and the pre-interaction action of the user is holding the mobile phone. As shown in (a) in FIG. 4 and (a) in FIG. 5, whether the user turns the head and whether the user leans in are analyzed by using reflected data of the millimeter-wave radar sensor or the lidar sensor, so that it can be identified that the pre-interaction action of the user is turning the head to look at the mobile phone and leaning in to look at the mobile phone.

Optionally, the electronic device may also determine a current pre-interaction action of the user based on data that is collected by the sensor and that is unrelated to the user. The data unrelated to the user may be related data of the electronic device. This is not limited in this application.

By way of example, but not limitation, the related data of the electronic device may be data that represents the location change of the electronic device, or may be data that represents the location change of the electronic device relative to the user. It may be understood that either the location change of the electronic device or the location change of the electronic device relative to the user is fundamentally caused because the user performs the pre-interaction action such as picking up the electronic device or moving the electronic device. Therefore, the electronic device may infer, based on the location change of the electronic device and/or the location change of the electronic device relative to the user, the pre-interaction action performed by the user.

Optionally, the mobile phone may also use the data that is collected by the sensor and that is unrelated to the user and the behavior data of the user to assist in determining the current pre-interaction action of the user.

It can be learned that the pre-interaction action of the user may be determined based on at least one of the location change of the electronic device and the location change of the electronic device relative to the user that are represented by the related data of the electronic device, and the body action change of the user and the location change of at least the part of the body of the user relative to the electronic device that are represented by the user behavior data, to improve intelligent experience of using the electronic device by the user.

Optionally, the pre-interaction action of the user may be continuous actions within a time period.

For example, as shown in (a) in FIG. 10, after the mobile phone receives an incoming call, the user turns the head to see the incoming call of the mobile phone, and does not want to answer the call at that time. Therefore, the user turns the head back to continue to watch a movie on a computer. In this time period, the user performs continuous actions of turning the head to see the mobile phone and then turning back. In this case, the continuous actions are a current pre-interaction action of the user.

Generally, the body action change of the user, the location change of at least the part of the body relative to the electronic device, the location change of the electronic device, and the location change of the electronic device relative to the user can be identified by using an existing sensor capability. Based on at least one of the foregoing changes, the pre-interaction action indicating that the user has an intention to interact with the mobile phone can be identified.

In this embodiment of this application, a specific pre-interaction action may include: 1. turning the head to look at the mobile phone; 2. leaning in to look at the mobile phone; 3. a part of the body approaching the mobile phone, with the distance to the mobile phone being less than a preset value; 4. touching the mobile phone and changing a posture of the mobile phone (for example, changing the mobile phone from being placed horizontally on a desktop to standing sideways), with a moving amplitude of the mobile phone being less than a preset value; and 5. moving the mobile phone close to the head of the user, with a distance between the mobile phone and the head of the user being less than a preset value.

S 1202: Process a target event, where the target event is viewing a real-time message on the electronic device.

Different pre-interaction actions express different processing intentions of the user. This intention may exactly match an event of the mobile phone, which means that the pre-interaction action of the user is most likely to process the event. Such an event may be referred to as the target event.

After identifying the pre-interaction action of the user, the mobile phone may infer an intention of the user based on the pre-interaction action of the user, and consider that the user expects to process the target event.

For example, as shown in (a) in FIG. 4, when the mobile phone receives the real-time message, if the user wants to view the real-time message, the user turns the head to look at the mobile phone. After detecting the user's pre-interaction action "turning the head", the mobile phone infers that the user wants to view the real-time message. Therefore, the mobile phone enters a lock screen interface from an always-on display interface.

It may be understood that, in different cases or when different people want to view a real-time message, pre-interaction actions may not be the same. For example, as shown in (a) in FIG. 6, when a real-time message is also received, the user may also directly stretch the hand to pick up the mobile phone, to view the real-time message. Therefore, any user action determined based on at least one of the location change of the electronic device and the location change of the electronic device relative to the user that are represented by the related data of the electronic device, the body action change of the user and the location change of at least the part of the body of the user relative to the electronic device represented by the user behavior data may be used as a pre-interaction action that represents that the user wants to view the real-time message, so that the electronic device enters the lock screen interface from the always-on display interface.

It may be understood that different pre-interaction actions may correspond to a same target event. For example, as shown in FIG. 4 and FIG. 5, the user turns the head and leans in both to process the target event of viewing the real-time message, but corresponding processing policies are different. After the user turns the head, a screen of the mobile phone switches from the always-on display interface to the unlock interface. After the user leans in, the screen of the mobile phone further expands a message bubble on the current unlock interface into a message card that displays all content of the message.

Optionally, the mobile phone may process the target event based on a correspondence between a target event and a preset processing policy. For example, the correspondence between the two may be represented in a table form shown in Table 1. This is not limited in this application. However, for ease of understanding, the following describes the correspondence between the two in the table form shown in Table 1.

**Table 1**

| Target event | Processing policy |
|---|---|
| The mobile phone receives a real-time message | Enter the unlock interface from the always-on display interface, and turn the screen off after 5s |
| The mobile phone receives a real-time message | Expand a message bubble into a card, and display complete content of the message on the card |
| The mobile phone receives a real-time message | Enter the unlock interface from the always-on display interface, expand the message in a form of a card, and display complete content of the message on the card |
| When the screen is off, the mobile phone receives several unprocessed historical messages | Enter the unlock interface from the always-on display interface |
| The mobile phone receives an incoming call | Answer the call |
| The mobile phone receives an incoming call | Hang up the call |
| Wake up a voice assistant | Automatically activate the voice assistant when a distance to the user is less than a preset value |

For example, as shown in (b) in FIG. 8, after determining that a current target event is "waking up the voice assistant", the mobile phone automatically activates the voice assistant based on, for example, the correspondence between a target event and a preset processing policy in Table 1 when determining that a distance between the mobile phone and the user is less than the preset value.

Optionally, the mobile phone may process the target event based on a correspondence between a target event, a pre-interaction action, and a preset processing policy. For example, the correspondence between the three may be represented in a table form shown in Table 2. This is not limited in this application. However, for ease of understanding, the following describes the correspondence between the three in the table form shown in Table 2.

**Table 2**

| Target event | Pre-interaction action | User intention | Processing policy |
|---|---|---|---|
| The mobile phone receives a real-time message | Turn the head to look at the mobile phone | Learn that the mobile phone receives a notification and check a notification type/sender | Enter the unlock interface from the always-on display interface, and turn the screen off after 5s |
| The mobile phone receives a real-time message | Lean in to look at the mobile phone (the head is in a facial recognition region) | View notification content in detail | Expand a message bubble into a card, and display complete content of the message on the card |
| The mobile phone receives a real-time message | The user actively approaches the mobile phone, and a distance to the mobile phone is less than a preset value | View notification content in detail | Enter the unlock interface from the always-on display interface, expand the message in a form of a card, and display complete content of the message on the card |
| When the screen is off, the mobile phone receives several unprocessed historical messages | Touch the mobile phone and change a posture of the mobile phone, with a moving amplitude of the mobile phone being less than a preset value | View a message received on a locked screen | Enter the unlock interface from the always-on display interface |
| The mobile phone receives an incoming call | Pick up and move the mobile phone close to the head of the user | Answer the call | Answer the call |
| The mobile phone receives an incoming call | Turn the head to look at the mobile phone and then move away | Hang up the call | Hang up the call |
| Wake up the voice assistant | Pick up and move the mobile phone close to the head of the user | Activate the voice assistant | Automatically activate the voice assistant when a distance to the user is less than a preset value |

In some embodiments, a same target event may correspond to more than one preset processing policy. For example, as shown in Table 2, the target event "the mobile phone receives a real-time message" corresponds to three processing policies: "enter the unlock interface from the always-on display interface, and turn the screen off after 5s", "expand a message bubble into a card, and display complete content of the message on the card", and "enter the unlock interface from the always-on display interface, expand the message in a form of a card, and display complete content of the message on the card". It should be noted that pre-interaction actions corresponding to the three processing policies are different. Therefore, the user intention may be determined based on both the pre-interaction action and the target event, so that the preset processing policy is determined.

For example, as shown in (b) in FIG. 4, the mobile phone may find the preset processing policy "enter the unlock interface from the always-on display interface, and turn the screen off after 5s" from, for example, Table 2 based on the user's action of turning the head and the event that the mobile phone receives the real-time message. For another example, as shown in (b) in FIG. 5, the mobile phone may find the preset processing policy "expand a message bubble into a card, and display complete content of the message on the card" from, for example, Table 2 based on the user's action of leaning in and the event that the mobile phone receives the real-time message. For another example, as shown in (b) in FIG. 6, the mobile phone may find the preset processing policy "enter the unlock interface from the always-on display interface, expand the message in a form of a card, and display complete content of the message on the card" from, for example, the preset processing policy in Table 2 based on an action that the hand of the user approaches the mobile phone and the event that the mobile phone receives an implementation message.

Optionally, when a plurality of real-time interactive events exist at the same time, and the pre-interaction action of the user can exactly meet processing of pre-interaction actions of the plurality of interactive events, the plurality of interactive events may be sequentially determined as target events. At a user layer, the plurality of real-time interactive events occur at the same time, but different interactive events are processed at the processor layer still in a time sequence.

For example, as shown in FIG. 11, when the user receives an incoming call, the user picks up the mobile phone and moves the mobile phone close to the head. In this process, the user always looks at the screen of the mobile phone. In a process of picking up and moving the mobile phone, the mobile phone receives an SMS message, and an SMS message bubble floats on an incoming call interface for display. Therefore, because two pre-interaction actions are met: leaning in to look at the mobile phone and picking up the mobile phone and moving the mobile phone close to the head of the user, the mobile phone may first determine "the mobile phone receives a message" as a target event, and expand the message bubble into a message card. The user views message content in the process of moving the mobile phone. After the mobile phone approaches the head, the mobile phone determines "the mobile phone receives an incoming call" as the target event, and automatically answers the incoming call when a distance between the mobile phone and the user is less than a preset value.

Optionally, the mobile phone may first find tasks on the mobile phone that can be processed by the user at a current moment, and the tasks may be referred to as interactive events. Then, the mobile phone determines the target event from the plurality of interactive events based on the pre-interaction action.

By way of example, but not limitation, the mobile phone may determine, by using a preset correspondence between a pre-interaction action and a target event, the target event corresponding to the pre-interaction action. For example, the correspondence between the two may be represented in a table form shown in Table 3. This is not limited in this application. However, for ease of understanding, the following uses the table form shown in Table 3 to represent the correspondence between the two.

**Table 3**

| Pre-interaction action | Target event |
|---|---|
| Turn the head to look at the mobile phone | The mobile phone receives a real-time message |
| Lean in to look at the mobile phone (the head is in a facial recognition region) | The mobile phone receives a real-time message |
| The hand of the user actively approaches the mobile phone, and a distance to the mobile phone is less than a preset value | The mobile phone receives a real-time message |
| Touch the mobile phone and change a posture of the mobile phone, with a moving amplitude of the mobile phone being less than a preset value | When the screen is off, the mobile phone receives several unprocessed historical messages |
| Pick up and move the mobile phone close to the | The mobile phone receives an incoming call |
| head of the user | |
| Turn the head to look at the mobile phone and then move away | The mobile phone receives an incoming call |
| Pick up and move the mobile phone close to the head of the user | Wake up the voice assistant |

For example, as shown in (a) in FIG. 6, after the mobile phone determines that the hand of the user actively approaches the mobile phone and a distance to the mobile phone is less than the preset value, the mobile phone determines, based on, for example, the correspondence between a target event and a pre-interaction action in Table 3, that a target event that matches the pre-interaction action is that the mobile phone receives the real-time message.

By way of example, but not limitation, the mobile phone may find, from all current processes of a system, a task that can be processed by the user at a current moment. This is not limited in this application. Any method of finding an interactive event at the current moment should fall within the protection scope of this application.

For example, as shown in (a) in FIG. 8, the user picks up the mobile phone and wants to wake up the voice assistant. The mobile phone determines that the user picks up the mobile phone and moves the mobile phone close to a mouth. In a current process of the mobile phone, only an interactive event of waking up the voice assistant matches the current action of the user. Therefore, the target event is determined as waking up the voice assistant.

An interactive event may be long-term, that is, may always exist. Such an event may be referred to as a long-term interactive event. For example, the user may wake up the digital assistant at any moment. Therefore, waking up the digital assistant may be used as a normal interactive event. For another example, when the mobile phone is in a locked state, in the locked state, the user may turn on the screen to briefly view a received message, or may unlock the screen to use the mobile phone. Therefore, there are two interactive events in the locked state: the mobile phone receives several unprocessed historical messages when the screen is off, and the mobile phone is unlocked to enter a home screen for usage. The two events exist normally.

An interactive event may also be real-time, that is, occurs only in a short time period. Such an event may be referred to as a real-time interactive event. For example, after a message is received, the user may need to preview the message. After a brief preview, if the message is important, the user may want to view the complete message. For another example, after an incoming call request is received, the user may need to answer/hang up the incoming call.

Optionally, if one pre-interaction action corresponds to two or more interactive events, when the target event is determined from the interactive events, the target event is preferentially determined from the real-time interactive event. When there is no real-time interactive event, or the current pre-interaction action of the user is not used to process the current real-time interactive event, the target event is determined from the persistent interactive event.

For example, as shown in (a) in FIG. 9, the user wants to answer a call in a speaker mode, and the mobile phone determines that the user picks up the mobile phone and moves the mobile phone close to the mouth. In a current process of the mobile phone, there are two interactive events: "the mobile phone receives an incoming call" and "waking up the voice assistant". "The mobile phone receives an incoming call" is a real-time event. That is, this event exists only when the mobile phone receives an incoming call, and does not exist when there is no incoming call. "Waking up the voice assistant" is a long-term event, that is, an event that exists when the user picks up the mobile phone at any time. Because the user performs the pre-interaction action only after the mobile phone receives the incoming call, the mobile phone determines that the intention of the user is more likely to answer the call. Therefore, the mobile phone determines that the target event is "the mobile phone receives an incoming call".

FIG. 13 is a flowchart of a human-computer interaction method 1300 according to an embodiment of this application. The method 1300 includes the following steps.

S1301: Obtain a first change, where the first change includes at least one of a body action change of a user, a location change of at least a part of a body of the user relative to an electronic device, a location change of the electronic device, and a location change of the electronic device relative to the user.

Optionally, the location change of at least the part of the body of the user relative to the electronic device may include a decrease in a distance between a head of the user and the electronic device. As shown in (a) in FIG. 8, the user wants to use a voice assistant. Therefore, the user performs a pre-interaction action of picking up the mobile phone and moving the mobile phone close to the head or a mouth. After identifying the pre-interaction action, the mobile phone infers that the user wants to wake up the voice assistant, and then the mobile phone automatically wakes up the voice assistant.

Optionally, the location change of the electronic device may include: moving the electronic device upward. As described above, the electronic device may also use data that is collected by a sensor and that is unrelated to the user and behavior data of the user to assist in determining a current pre-interaction action of the user. As shown in (a) in FIG. 8, the mobile phone may identify that a distance between the head or mouth of the user and the mobile phone gradually decreases. In addition, the mobile phone may further identify that the mobile phone is moving upward. The mobile phone may determine, based on the foregoing two types of information, that the pre-interaction action of the user is picking up the mobile phone and moving the mobile phone close to the head of the user. If it is identified, through a gyro, that the mobile phone is in a static state, as shown in (a) in FIG. 6, it is determined that the pre-interaction action of the user is that a hand of a person actively approaches the mobile phone.

S1302: Process a target event, where the target event is waking up the voice assistant.

Optionally, after identifying the pre-interaction action that may represent that the user wants to wake up the voice assistant, the electronic device wakes up the voice assistant when a distance between the electronic device and the user is less than a preset value. For example, as shown in (a) in FIG. 8, when the user picks up the mobile phone and gradually moves the mobile phone close to the head or mouth of the user, and when a distance between the mobile phone and the head of the user is less than 8 cm, the mobile phone may automatically wake up the voice assistant.

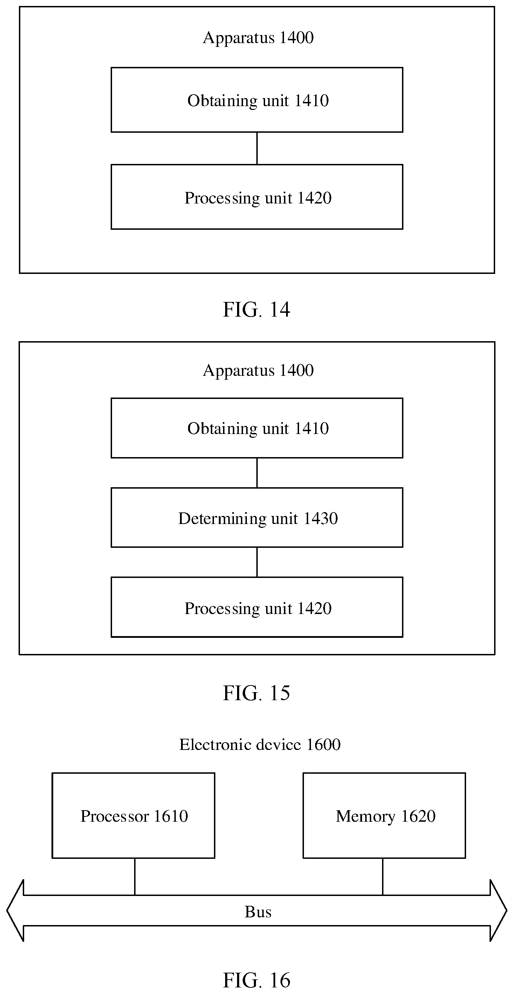

FIG. 14 is a possible diagram of composition of a human-computer interaction apparatus 1400 in the foregoing embodiments. The apparatus 1400 may be disposed in an electronic device such as the mobile phone.

When the apparatus 1400 is configured to implement the functions in the method embodiment in FIG. 12, the apparatus 1400 may include:
an obtaining unit 1410 that may be configured to obtain a first change, where the first change includes at least one of a body action change of a user, a location change of at least a part of a body of the user relative to the electronic device, a location change of the electronic device, and a location change of the electronic device relative to the user; and
a processing unit 1420 that may be configured to process a target event, where the target event is viewing a real-time message on the electronic device.

Optionally, the body action change of the user includes turning of a head of the user.

Optionally, the turning of the head of the user is determined based on a change of a head reflective surface of the user from a head side to a head front.

Optionally, the target event is one of a plurality of interactive events.

Optionally, the processing unit 1420 may be further configured to enable the electronic device to enter a lock screen interface from an always-on display interface.

Optionally, when a distance between the head of the user and the electronic device decreases, the processing unit 1420 is further configured to enable the electronic device to display all content of the real-time message on the lock screen interface.

Optionally, the decrease in the distance between the head of the user and the electronic device is determined based on an increase in the head reflective surface of the user.

Optionally, the obtaining unit 1410 may be further configured to obtain the first change when a to-be-processed event occurs in the electronic device.

Optionally, the obtaining unit 1410 may be further configured to obtain the first change by using at least one of a millimeter-wave radar sensor, a lidar sensor, and an ultrasonic radar sensor.

Optionally, as shown in FIG. 15, the human-computer interaction apparatus 1400 may further include:
a determining unit 1430 that may be configured to determine the plurality of interactive events based on a current process of the electronic device, so that the target event can be determined from the plurality of interactive events.

Optionally, the determining unit 1430 may be further configured to: determine a priority ranking of the plurality of interactive events, where the plurality of interactive events include a real-time interactive event and a long-term interactive event, a priority of the real-time interactive event is higher than a priority of the long-term interactive event, the real-time interactive event is an event that needs to be processed by the user within a preset time period, and the long-term interactive event is an event that is available for the user to process at any time; and determine the target event from the plurality of interactive events based on the first change and the priority ranking.

When the human-computer interaction apparatus 1400 is configured to implement the functions in the method embodiment in FIG. 13, the apparatus 1400 may include:
an obtaining unit 1410 that may be configured to obtain a first change, where the first change includes at least one of a body action change of a user, a location change of at least a part of a body of the user relative to the electronic device, a location change of the electronic device, and a location change of the electronic device relative to the user; and
a processing unit 1420 that may be configured to process a target event, where the target event is waking up a voice assistant.

Optionally, the location change of at least the part of the body of the user relative to the electronic device includes a decrease in a distance between a head of the user and the electronic device.

Optionally, the location change of the electronic device includes: moving the electronic device upward.

Optionally, the processing unit 1420 may be further configured to wake up the voice assistant when a distance between the electronic device and the user is less than a preset value.

The apparatus provided in this embodiment is configured to perform the human-computer interaction method, and therefore can achieve same effects as the foregoing implementation method.

It should be noted that all related content of the steps in the foregoing method embodiments may be cited in function description of corresponding functional unit. Details are not described herein again.

It may be understood that, to implement the foregoing functions, the electronic device includes corresponding hardware and/or software modules for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each specific application with reference to embodiments. However, it should not be considered that the implementation goes beyond the scope of this application.

In embodiments, the electronic device may be divided into functional units based on the foregoing method examples, for example, each functional unit may be obtained through division based on each corresponding function, or two or more functions may be integrated into one processing unit. The integrated unit may be implemented in a form of hardware. It should be noted that the unit division in the embodiments is an example, and is merely logical function division and may be another division manner during actual implementation.

When each functional unit is obtained through division based on each corresponding function, FIG. 16 is a possible diagram of composition of an electronic device 1600 in the foregoing embodiment. As shown in FIG. 16, the electronic device includes one or more processors 1610, and one or more memories 1620. The one or more memories 1620 store one or more computer programs, and the one or more computer programs include instructions. When the instructions are run by the one or more processors 1610, the electronic device such as a mobile phone is enabled to perform the technical solutions in the foregoing embodiments.

An embodiment of this application provides a computer program product. When the computer program product runs on an electronic device such as a mobile phone, the electronic device such as the mobile phone is enabled to perform the technical solutions in the foregoing embodiments. An implementation principle and a technical effect of the computer program product are similar to those of the method-related embodiments, and details are not described herein again.

An embodiment of this application provides a computer-readable storage medium. The computer-readable storage medium includes instructions. When the instructions are run on an electronic device such as a mobile phone, the electronic device such as the mobile phone is enabled to perform the technical solutions in the foregoing embodiments.

The foregoing descriptions about implementations allow a person skilled in the art to understand that, for the purpose of convenient and brief description, division into the foregoing functional units is used as an example for illustration. In actual application, the foregoing functions may be allocated to different functional units and implemented based on a requirement, that is, an inner structure of an apparatus is divided into different functional units to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, such as a USB flash drive, a removable hard disk, a read only memory (read only memory, ROM), a random access memory (random access memory, RAM), a magnetic disk, or an optical disc.

The foregoing content is merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A human-computer interaction method, wherein the method is applied to an electronic device, and the method comprises:
obtaining a first change, wherein the first change comprises at least one of a body action change of a user, a location change of at least a part of a body of the user relative to the electronic device, a location change of the electronic device, and a location change of the electronic device relative to the user; and
processing a target event, wherein the target event is viewing a real-time message on the electronic device.

2. The method according to claim 1, wherein the body action change of the user comprises turning of a head of the user.

3. The method according to claim 2, wherein the turning of the head of the user is determined based on a change of a head reflective surface of the user from a head side to a head front.

4. The method according to any one of claims 1 to 3, wherein the target event is one of a plurality of interactive events.

5. The method according to claim 4, wherein the method further comprises:
determining the plurality of interactive events based on a current process of the electronic device.

6. The method according to claim 4 or 5, wherein the method further comprises:
determining a priority ranking of the plurality of interactive events, wherein the plurality of interactive events comprise a real-time interactive event and a long-term interactive event, a priority of the real-time interactive event is higher than a priority of the long-term interactive event, the real-time interactive event is an event that needs to be processed by the user within a preset time period, and the long-term interactive event is an event that is available for the user to process at any time; and
determining the target event from the plurality of interactive events based on the first change and the priority ranking.

7. The method according to any one of claims 1 to 6, wherein processing the target event comprises: entering, by the electronic device, a lock screen interface from an always-on display interface.

8. The method according to claim 7, wherein when a distance between the head of the user and the electronic device decreases, processing the target event further comprises:
displaying, by the electronic device, all content of the real-time message on the lock screen interface.

9. The method according to claim 8, wherein the decrease in the distance between the head of the user and the electronic device is determined based on an increase in the head reflective surface of the user.

10. The method according to any one of claims 1 to 9, wherein obtaining the first change comprises:
obtaining the first change when a to-be-processed event occurs in the electronic device.

11. The method according to any one of claims 1 to 10, wherein obtaining the first change comprises: obtaining the first change through at least one of a millimeter-wave radar sensor, a lidar sensor, and an ultrasonic radar sensor.

12. A human-computer interaction method, wherein the method is applied to an electronic device, and the method comprises:
obtaining a first change, wherein the first change comprises at least one of a body action change of a user, a location change of at least a part of a body of the user relative to the electronic device, a location change of the electronic device, and a location change of the electronic device relative to the user; and
processing a target event, wherein the target event is waking up a voice assistant.

13. The method according to claim 12, wherein the location change of at least the part of the body of the user relative to the electronic device comprises: a distance between a head of the user and the electronic device decreases.

14. The method according to claim 12 or 13, wherein the location change of the electronic device comprises: moving the electronic device upward.

15. The method according to any one of claims 12 to 14, wherein the voice assistant is woken up when a distance between the electronic device and the user is less than a preset value.

16. A human-computer interaction apparatus, wherein the apparatus comprises a unit configured to perform the method according to any one of claims 1 to 11 or 12 to 15.

17. An electronic device, wherein the electronic device comprises:
a memory, configured to store a computer program; and
a processor, configured to execute the computer program stored in the memory, so that the electronic device performs the method according to any one of claims 1 to 11 or 12 to 15.

18. A computer-readable storage medium, wherein the computer-readable storage medium stores a computer program; and when the computer program is executed by a computer, the computer is enabled to perform the method according to any one of claims 1 to 11 or 12 to 15.

19. A computer program product, wherein the computer program product comprises a computer program, and when the computer program is executed by a computer, the computer is enabled to perform the method according to any one of claims 1 to 11 or 12 to 15.
